# EUROPEAN PATENT APPLICATION

(11) **EP 2 135 912 A1**
(43) Date of publication of application: **23.12.2009**
(21) Application number: 08704307.1
(22) Date of filing: 31.01.2008
(51) Int. Cl.: C09K 3/10, C08K 5/13, C08L 27/16, F16J 15/16

(54) **CROSSLINKED FLUORORUBBER FOR ROTATIONAL SLIDING SEALING AND PROCESS FOR PRODUCING THE SAME**

(30) Priority: 01.02.2007 JP 2007023028; 26.06.2007 JP 2007168114
(71) Applicant: NOK Corporation, Minato-ku Tokyo 105-8585 (JP)
(72) Inventor: HIROSE, Shiro, Fujisawa-shi Kanagawa 251-0042 (JP); MIZUTA, Hirotaka, Fujisawa-shi Kanagawa 251-0042 (JP); SUZUKI, Nozomu, Fujisawa-shi Kanagawa 251-0042 (JP)
(74) Representative: Gulde Hengelhaupt Ziebig & Schneider
(86) International application number: PCT/JP2008/051568
(87) International publication number: WO 2008/093803

(57) **Abstract**

Providing a crosslinked fluororubber for a rotational sliding sealing which can attain a reduction in torque (friction reduction) and is effective in diminishing oil leakage thereby improving initial properties concerning sealing properties (amount of oil pumping with sliding of sealing member) and which, even after friction and wear have occurred, can inhibit decrease of these properties and can improve conformability to eccentricity, and a method for producing the same.
A crosslinked fluororubber for a rotational sliding sealing, wherein a fluororubber polymer composed of 95 to 50 wt% of a polyol-crosslinkable fluororubber polymer and 5 to 50 wt% of a liquid fluororubber polymer is obtained by crosslinking with polyol alone using a polyol crosslinking agent, and a method for producing the same.

## Description

### TECHNICAL FIELD

The present invention relates to a crosslinked fluororubber for a rotational sliding sealing and a method for producing the same, and particularly relates to a crosslinked fluororubber for a rotational sliding sealing which can attain a reduction in torque (friction reduction) and is effective in diminishing oil leakage thereby improving initial properties concerning sealing properties (amount of oil pumping with sliding of sealing member) and which, even after friction and wear have occurred, can inhibit decrease of these properties, and a method for producing the same.

### BACKGROUND ART

With recent increase of environmental problems, the reduction of friction in parts has been required for the purpose of improving fuel cost, and development has been carried out in oil sealing in consideration of reducing the friction. Further enhancement of sealing performance is also required as the enhancement of product functions with making maintenance free products.

Here, conventionally those using vinylidene fluoride-based fluororubber (FKM) as a base polymer have been known in the oil sealing in terms of heat resistance and oil resistance (Patent Documents 1, 2 and 3).

And, those having the low friction and a sealing property as initial properties have been proposed, but friction and wear of members occur in sliding members such as oil sealing. Thus, it is a large technical problem that these properties are kept for a long period of time.

That is, various materials, which have attained the reduction of friction and wear in the fluororubber (FKM) members for sliding have been proposed, but it has been difficult that the reduction of friction and the sealing property are sufficiently assured in that case.

There have been problems that it is difficult to reduce hardness, conformability to eccentricity is wrong and change of a torque after the friction is large.
Patent Document 1: JP Hei-9-143327-A
Patent Document 2: JP Hei-8-151565-A
Patent Document 3: JP Hei-3-66714-A

### DISCLOSURE OF INVENTION

### PROBLEM TO BE SOLVED BY THE INVENTION

Thus, the present invention solves the above conventional technical problems. An object of the invention is to provide a crosslinked fluororubber for a rotational sliding sealing which can attain a reduction in torque (friction reduction) and is effective in diminishing oil leakage thereby improving initial properties concerning sealing properties (amount of oil pumping with sliding of sealing member) and which, even after friction and wear have occurred, can inhibit decrease of these properties and can improve conformability to eccentricity, and a method for producing the same.

Other objects of the invention will become apparent from the following description.

### MEANS FOR SOLVING PROBLEM

The above-described object can be solved by the following inventions.

The invention according to claim 1 resides in a crosslinked fluororubber for a rotational sliding sealing, wherein a fluororubber polymer composed of 95 to 50 wt% of a polyol-crosslinkable fluororubber polymer and 5 to 50 wt% of a liquid fluororubber polymer is obtained by crosslinking with polyol alone using a polyol crosslinking agent.

The invention according to claim 2 resides in the crosslinked fluororubber for the rotational sliding sealing recited in claim 1, wherein the polyol-crosslinkable fluororubber polymer is a binary fluororubber polymer or a ternary fluororubber polymer of a polyol-crosslinking type.

The invention according to claim 3 resides in the crosslinked fluororubber for the rotational sliding sealing recited in claim 1 or 2, wherein 1 to 10 parts by weight of the polyol crosslinking agent is blended to 100 parts by weight of the fluororubber polymer composed of 95 to 50 wt% of the polyol-crosslinkable fluororubber polymer and 5 to 50 wt% of the liquid fluororubber polymer.

The invention according to claim 4 resides in the crosslinked fluororubber for the rotational sliding sealing according to claim 1 or 2, wherein 2 to 5 parts by weight of the polyol crosslinking agent is blended to 100 parts by weight of the fluororubber polymer composed of 95 to 50 wt% of the polyol-crosslinkable fluororubber polymer and 5 to 50 wt% of the liquid fluororubber polymer.

The invention according to claim 5 resides in a method for producing a crosslinked fluororubber for a rotational sliding sealing, wherein a polyol crosslinking agent is blended to a fluororubber polymer composed of 95 to 50 wt% of a polyol-crosslinkable fluororubber polymer and 5 to 50 wt% of a liquid fluororubber polymer to prepare a fluororubber composition, which is then crosslinked.

The invention according to claim 6 resides in the method for producing the crosslinked fluororubber for the rotational sliding sealing according to claim 5, wherein the polyol-crosslinkable fluororubber polymer is a binary fluororubber polymer or a ternary fluororubber polymer of a polyol-crosslinking type.

The invention according to claim 7 resides in the method for producing the crosslinked fluororubber for the rotational sliding sealing according to claim 5 or 6, wherein 1 to 10 parts by weight of the polyol crosslinking agent is blended to 100 parts by weight of the fluororubber polymer composed of 95 to 50 wt% of the polyol-crosslinkable fluororubber polymer and 5 to 50 wt% of the liquid fluororubber polymer.

The invention according to claim 8 resides in the method for producing the crosslinked fluororubber for the rotational sliding sealing according to claim 5 or 6, wherein 2 to 5 parts by weight of the polyol crosslinking agent is blended to 100 parts by weight of the fluororubber polymer composed of 95 to 50 wt% of the polyol-crosslinkable fluororubber polymer and 5 to 50 wt% of the liquid fluororubber polymer.

### EFFECT OF THE INVENTION

According to the present invention, it is possible to provide the crosslinked fluororubber for the rotational sliding sealing which can attain the reduction in torque (friction reduction) and is effective in diminishing oil leakage thereby improving initial properties concerning sealing properties (amount of oil pumping with sliding of sealing member) and which, even after friction and wear have occurred, can inhibit decrease of these properties and can improve conformability to eccentricity, and the method for producing the same.

### BRIEF DESCRIPTION OF DRAWINGS

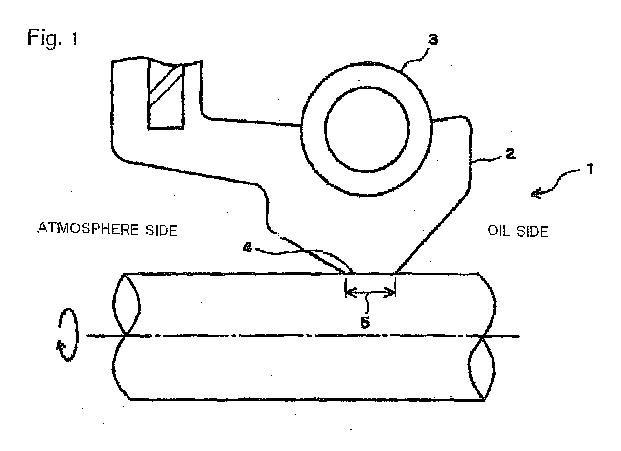

FIG. 1 is a view showing a state where a rotational sliding sealing of the invention has been attached.

### EXPLANATIONS OF LETTERS OR NUMERALS

- 1:: Rotational sliding sealing
- 2:: Sealing lip part
- 3:: Garter spring
- 4:: Oil membrane
- 5:: Contact width

### BEST MODES FOR CARRYING OUT THE INVENTION

Embodiments of the present invention will be described below.

The crosslinked fluororubber for the rotational sliding sealing according to the invention is obtained by crosslinking the fluororubber polymer composed of 95 to 50 wt% of the polyol-crosslinkable fluororubber polymer and 5 to 50 wt% of the liquid fluororubber polymer with polyol alone using the polyol crosslinking agent (a total weight of two polymer components is 100 wt%).

A polymer or copolymer of one or more flourine-containing olefins can be used as a polyol-crosslinkable flourorubber polymer.

Specific examples of fluorine-containing olefins include vinylidene fluoride, hexafluoropropylene, pentafluoropropylene, trifluoroethylene, trifluorochloroethylene, tetrafluoroethylene, vinyl fluoride, perfluoroacrylate esters, perfluoroalkyl acrylates, perfluoromethyl vinyl ether, perfluoropropyl vinyl ether, and the like. These fluorine-containing olefins may be used alone or in combination.

Preferable examples of the polyol-crosslinking fluororubber polymers of the invention include binary fluororubber polymers or ternary fluororubber polymers of the polyol-crosslinking type. The binary fluororubber polymers of the polyol-crosslinking type include fluororubber polymers vinylidene fluoride-hexafluoropropylene binary copolymer (abbreviation: VDF-HFP). The ternary fluororubber polymers of the polyol-crosslinking type include vinylidene fluoride-hexafluoropropylene-tetrafluoroethylene ternary copolymer (abbreviation:VDF-HFP-TFE) and the like. The binary fluororubber polymer is more preferable because this is excellent in friction and conformability to eccentricity.

These polymers are obtained by conventional methods such as solution polymerization, suspension polymerization and emulsification polymerization, and are obtainable as commercially available products (e.g., Viton A, Viton GBL manufactured by DuPont).

The liquid fluororubber polymers include vinylidene fluoride-hexafluoropropylene copolymers, vinylidene fluoride-hexafluoropropylene-tetrafluoroethylene copolymers, or perfluoropropylene oxide-based copolymers, or the like, whose viscosity (100°C) is about 400 to 4,000 cps. Those having the viscosity of about 500 to 3,000 cps are preferable.

The liquid fluororubber polymers are obtained by conventional methods such as solution polymerization, suspension polymerization and emulsification polymerization, and are obtainable as the commercially available products (e.g., Diel G-101 manufactured by Daikin Industries, Ltd., SIFEL series manufactured by Shin-Etsu Chemical Co., Ltd., Viton LM manufactured by DuPont).

For a ratio of blended the polyol-crosslinkable fluororubber polymer and the liquid fluororubber polymer which compose the fluororubber polymer, an amount of the polyol-crosslinkable fluororubber polymer is 95 to 50 wt%, preferably 90 to 70 wt%, and an amount of the liquid fluororubber polymer is 5 to 50 wt%, preferably 10 to 30 wt% (the total weight of two polymer components is 100 wt%).

When the amount of the liquid fluororubber polymer exceeds the range of 5 to 50 wt%, a kneading property is deteriorated and mold tackiness easily occurs (i.e., molding becomes difficult or impossible).

In the invention, a reason why the crosslinking with polyol alone is employed and the crosslinking with peroxide is not employed is because the torque is excessively high in the crosslinking with peroxide, which is not preferable as the rotational sliding sealing as the product.

A bisphenols is preferable as a polyol crosslinking agent. Specific examples of bisphenols include polyhydroxy aromatic compounds such as 2,2-bis(4-hydroxyphenyl)prapane[bisphenol A], 2,2-bis(4-hydroxyphenyl)perfluoropropane[bisphenol AF], bis(4-hydroxyphenyl)sulfone[bisphenol S], bisphenol A-bis(diphenyl phosphate), 4,4'-dihydroxydiphenyl, 4,4'-dihydroxydiphenylmethane, 2,2-bis(4-hydroxyphenyl)butane, and the like; among which bisphenol A and bisphenol AF, and the like are preferbly used. They may be in the form of alkali metal salts or alkali earth metal salts.

A commercially available master batch containing a raw rubber and the crosslinking agent may also be used as the polyol crosslinking agent. These crosslinking agents may be used alone or in combination.

A content of the polyol crosslinking agent is 1 to 10 parts by weight and preferably 2 to 5 parts by weight based on 100 parts by weight of the fluororubber polymer composed of the polyol-crosslinkable fluororubber polymer and the liquid fluororubber polymer.

In the invention, a crosslinking accelerator can be used together with the polyol crosslinking agent. As the crosslinking accelerator, for example, quaternary phosphonium salts represented by a general formula (R₁R₂R₃R₄P)⁺X⁻ can be used, wherein R₁ to R₄ represent a C₁-C₂₅ alkyl, alkoxy, aryl, alkylaryl, aralkyl group, or a polyoxyalkylene group; alternatively, two or three of R₁ to R₄ together with P can also form a heterocyclic structure; X⁻ represents anion such as Cl⁻, Br⁻, I⁻, HSO₄⁻, H₂PO4⁻, RCOO⁻, ROSO₂⁻, RSO⁻, ROPO₂H⁻ and CO₃²⁻, or the like; and R here is the same as defined in aforementioned R₁ to R₄.

Specific examples of quaternary phosphonium salts include tetraphenylphosphonium chloride, triphenylbenzylphosphonium chloride, triphenylbenzylphosphonium bromide, triphenylmethoxymethylphosphonium chloride, triphenylmethylcarbonyl methylphosphonium chloride, triphenylethoxycarbonyl methylphosphonium chloride, trioctylbenzyl phosphonium chloride, trioctylmethylphosphonium bromide, trioctylethyl phosphonium acetate, trioctylethyl phosphonium dimethylphosphate, tetraoctylphosphonium chloride, cetyldimethylbenzyl phosphonium chloride, and the like.

A commercially available master batch containing a raw rubber and a crosslinking accelerator may also be used as a crosslinking accelerator. These crosslinking accelerators may be used alone or in combination.

As the crosslinking accelerator, a quaternary ammonium salt represented by the following general formula can be used alone or together with the above quaternary phosphonium salt.

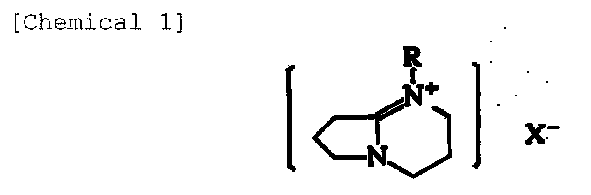

Wherein R represents a C₁-C₂₄ alkyl group or a C₁-C₂₄ aralkyl group; and X⁻ represents a tetrafluoroborate group or a hexafluorophosphate group.

A compound wherein R is benzyl is preferable as the quaternary ammonium salt, such as, for examples, 5-benzyl-1,5-diazabicyclo[4,3,0]-5-nonenium tetrafluoroborate (abbreviation: DBN-F) or hexafluorophosphate (abbreviation: DBN-P), or the like.

The tetrafluoroborate and hexafluorophosphate have melting points of about 80°C and 100°C, respectively, and exhibit excellent dispersibility because they easily melt during heat kneading are easily melted in heated kneading (100°C) using a roll, a kneader a Banbury mixer, or the like.

A commercially available master batch containing a raw rubber and a quaternary ammonium salt may also be used as a quaternary ammonium salt. These quaternary ammonium salts may be used alone or in combination.

The content of the polyol crosslinking accelerator is typically 0.3 to 20 parts by weight, and more preferably 0.5 to 10 parts by weight, per 100 parts by weight of the fluororubber polymer composed of the polyol-crosslinkable fluororubber polymer and the liquid fluororubber polymer.

In the invention, components generally used in the rubber industry may be added, as required,as other blending components within a range such that the effects of the crosslinking agent and crosslinking accelerator used in the invention are not impaired. Examples of other components, in addition to the above components,as rubber compounding agents include reinforcers such as carbon black and carbon fibers and the like; fillers such as hydrotalcite [Mg₆Ag₂(OH)₁₆CO₃], calcium carbonate, magnesium carbonate, aluminium hydroxide, magnesium hydroxide, aluminium silicate, magnesium silicate, calcium silicate, potassium titanate, titanium oxide, barium sulfate, aluminium borate, glass fibers, aramid fibers, diatomite and wollastonite, and the like; processing aids such as waxes, metal soaps and carnauba wax, and the like; acid acceptors such as calcium hydroxide, magnesium oxide and zinc oxide; anti-aging agents; thermoplastic resins; clays, others such as fibrous fillers;etc.

Among them, calcium hydroxide can be preferably used for properly controlling a crosslinked density, is preferable for reducing a friction coefficient of the crosslinked fluororubber and obtaining a low rebound elastic modulus, and is more desirable because effervescence hardly occurs upon molding. It is also preferable to use magnesium oxide for obtaining the low rebound elastic modulus of the crosslinked fluororubber or obtaining the low friction coefficient and the low tackiness.

Example of method for preparing the fluororubber composition include a method in which predetermined amounts of the above-described components are kneaded using a closed kneader such as an intermix, a kneader, or a Banbury mixer, or using a general kneader for rubber such as an open roll mill; a method in which each component is dissolved in a solvent or the like and dispersed with a stirrer or the like; and so forth.

The fluororubber composition prepared as described above is pressurized, heated and vulcanized to mold a vulcanized product.

Specifically, the fluororubber composition prepared as described above is crosslinked (vulcanized) by heating (primary vulcanization) typically at a temperature of 140 to 230°C for about 1 to 120 minutes, using an injection molding machine, a compression molding machine, a vulcanizing press, an oven, or the like, thereby molding a vulcanized product(crosslinked fluororubber).

The primary vulcanization is a process of crosslinking the fluororubber composition to such a degree that its shape can be maintained to form (preform) a certain shape. In the case of a complicated shape, the composition is molded with a mold, and primary vulcanization can also be performed in an air oven or the like.

In the invention, the secondary vulcanization can be carried out if necessary. The secondary vulcanization may be carried out by the ordinary method, and preferably carried out by treating at 200 to 300°C for 1 to 20 hours.

The rotational sliding sealing is obtained by molding the crosslinked fluororubber obtained by crosslinking with polyol alone into various shapes.

### EXAMPLES

The present invention is hereinafter described based on Examples; however, the invention is not limited by the Examples in any way.

### Example 1

| | |
|---|---|
| <Blending Components and Amounts Thereof> | |
| Vinylidene fluoride-hexafluoropropylene binary fluororubber polymer (Viton A500 manufactured by DuPont Dow Elastomer, polyol-vulcanized, Mooney viscosity VL₁₊₁₀ (121°C) 45) | 80 parts by weight |
| Liquid fluororubber polymer (Diel G-101 manufactured by Daikin Industries, Ltd.,) | 20 parts by weight |
| Polyol crosslinking agent: | |
| Curative VC#30 (master batch of 50 wt% of a hydroxy aromatic compound and 50 wt% of a fluororubber [Viton E-45] manufactured by DuPont Dow Elastomer) | 2.5 parts by weight |
| Polyol crosslinking accelerator: | |
| Curative VC#20 (master batch of 33 wt% of a quaternary phosphonium salt and 67 wt% of a fluororubber [Viton E-45] manufactured by DuPont Dow Elastomer) | 1.2 parts by weight |
| Fillers: Diatomite (manufactured by Chuo Silica Co., Ltd.) | 15 parts by weight |
| Wollastonite (aspect ratio: 5, NYAD400 manufactured by NYCO) 35 parts by weight | |

| | |
|---|---|
| Carbon black (N990 manufactured by Cancarb) | 2 parts by weight |
| Processing aid (crosslinking accelerator): Carnauba wax (VPA No. 2, melting point: 860°C, manufactured by DuPont Dow Elastomer) | 2.0 parts by weight |
| Acid acceptors: | |
| Calcium hydroxide (Caldic #2000 manufactured by Ohmi Chemical Industry Co., Ltd.) | 3 parts by weight |
| Magnesium oxide (Kyowamag #150 manufactured by Kyowa Chemical Industry Co., Ltd.) | 6 parts by weight |

### <Preparation and Molding of a Vulcanized Product>

The above-listed components (except for the vulcanizing components) were thrown into a kneader and kneaded for 20 minutes, after which the vulcanizing components were thrown into an open roll mill, thereby preparing a composition.

The resulting composition was pressurized and vulcanized at 170°C for 20 minutes to mold a crosslinked fluororubber (vulcanized product) for the rotational sliding sealing of the invention.

### <Evaluation methods>

### 1. Physical properties of crosslinked fluororubber for rotational sliding sealing in ordinary state

An unvulcanized rubber sheet having a thickness of 2 mm was made using the above composition (excluding vulcanizing components) by a 6 inches mixing roll, this was press-vulcanized at 180°C for 60 minutes, and subsequently an open vulcanization at 200°C for 24 hours was given thereto to obtain a sheet rubber test piece for evaluating the physical properties in the ordinary state.

This test piece was evaluated for its rubber hardness Hs, tensile strength Tb (MPa) and elongation Eb (%). Evaluation results are shown in Table 1.

The rubber hardness Hs was measured using a durometer in accordance with JIS K6253.

The tensile strength Tb (MPa) was measured in accordance with JIS K-6251.

The elongation Eb (%) was measured in accordance with JIS K6251 at 23±3°C.

### 2. Product evaluation

A rubber material in blending shown in Table 1 was kneaded and formed, and this was vulcanized and molded to obtain a rotational sliding sealing. A product evaluation was performed concerning this.

The molded rotational sliding sealing (inner diameter:85 mm, outer diameter:105 mm, width:13 mm) or one obtained by forcibly frictionizing and wearing this (obtained by frictionizing and wearing the seal lip by winding an abrasive paper on a rotational axis aiming at a frictionized and worn amount of 300 µm) was set in a rotation test machine to perform a rotation test, and a sliding torque (friction evaluation) involved in the sealing and an oil pumping amount (sealing property evaluation) were evaluated. The results are shown in Table 1.

The test was performed under the condition of a test temperature at 100°C and a rotation frequency at 2000 rpm in a state where lubrication oil (Toyota genuine product, Castle Oil SM grade 10W-30) was sealed in an axial center.

For the sliding torque, the torque involved in the sealing in a rotation test was measured using a load cell attached to the rotational sliding sealing.

For the pumping amount Q, as shown in FIG. 1, a certain amount of the oil was supplied by a syringe to a sealing lip part 2 in the state where the rotational sliding sealing 1 was normally attached (state of sucking the oil into the lip), a time period from the supply of the oil to completion of sucking was measured (3 times), and the amount was calculated from the following formula. In the figure, a garter spring is denoted by 3, an oil membrane is denoted by 4 and a contact width is denoted by 5.

Q [cc/hr]=Supplied amount [g]/(Oil density [g/cc]/Time required for sucking [second]x3600)

### 3. Conformability to eccentricity

### Measurement method

The same rotational sliding sealing (an exposed thread of the sealing lip in the state with no axial eccentricity was set to be 1 mm) as in the product evaluation test was set in a rotation test machine in which the axis was optionally decentered in a predetermined quantity, and the rotation test was performed under the condition of a test temperature at 100°C and a rotation frequency at 2000 rpm. Then, the presence or absence of oil leakage was visually observed. The quantity of the axial eccentricity was gradually increased, and the quantity of the axial eccentricity when the oil leakage occurred was obtained.

### Evaluation criteria

The results were evaluated according to the following criteria, and their results are shown in Table 1.

For the evaluation, a ratio of the quantity of the axial eccentricity when the oil leakage occurred to the exposed thread (quantity of axial eccentricity/exposed thread) was obtained. The ratio of 0.60 or more, 0.45 to less than 0.60, 0.30 to less than 0.45 and less than 0.30 were ranked as A, B, C and D, respectively.

### Example 2

Evaluation was performed in the same way as in Example 1, except that 34 parts by weight of vinylidene fluoride-hexafluoropropylene-tetrafluoroethylene ternary fluororubber polymer (Viton GBL-900 manufactured by DuPont Dow Elastomer) in place of vinylidene fluoride-hexafluoropropylene binary fluororubber polymer and 46 parts by weight of Viton GBL-200 were mixed and Mooney viscosity VL₁₊₁₀ (121°C) 50) was 80 parts by weight.

The results are shown in Table 1.

### Comparative Example 1

Evaluation was performed in the same way as in Example 1, except that the liquid fluororubber polymer in the fluororubber polymer component was not used and the amount of the vinylidene fluoride-hexafluoropropylene binary fluororubber polymer was 100 parts by weight.

The results are shown in Table 1.

### Comparative Example 2

Evaluation was performed in the same way as in Comparative Example 1, except that the filler Diatomite (Silika 6B manufactured by Chuo Silica Co., Ltd.) was not used.

The results are shown in Table 1.

### Comparative Example 3

Evaluation was performed in the same way as in Comparative Example 2, except that the liquid fluororubber polymer in the fluororubber polymer component was not used, 43 parts by weight of vinylidene fluoride-hexafluoropropylene-tetrafluoroethylene ternary fluororubber polymer (Viton GBL-900 manufactured by DuPont Dow Elastomer) and 57 parts by weight of Viton GBL-200 were mixed and Mooney viscosity VL₁₊₁₀ (121°C) 50) was 100 parts by weight.

The results are shown in Table 1.

**Table 1**

| unit: parts by weight | | | | | | |
|---|---|---|---|---|---|---|
| Example | | EXP 1 | EXP 2 | COM EXP 1 | COM EXP 2 | COM EXP 3 |
| Polymer | Binary fluororubber 1 | 80 | | 100 | 100 | |
| | Ternary fluororubber | | 34 | | | 43 |
| | Ternary fluororubber | | 46 | | | 57 |
| | Liquid fluororubber | 20 | 20 | | | |
| Filler | Diatomite Wollastonite | 15 35 | 15 35 | 15 35 | 35 | 15 35 |
| Carbon | Carbon black | 2 | 2 | 2 | 2 | 2 |
| Processing aid | Carnauba wax | 2.0 | 2.0 | 2.0 | 2.0 | 2.0 |
| vulcanized agent | Bisphenol Phosphonium salt | 2.5 1.2 | 2.5 1.2 | 2.5 1.2 | 2.5 1.2 | 2.5 1.2 |
| Acid acceptor | Calcium hydroxide | 3 | 3 | 3 | 3 | 3 |
| | Magnesium oxide | 6 | 6 | 6 | 6 | 6 |
| Total | | 166.7 | 166.7 | 166.7 | 151.7 | 166.7 |
| Ordinary state value | Hs (Duro A) | 76 | 80 | 81 | 75 | 85 |
| | Tb (MPa) | 10 | 8.1 | 13.4 | 10.9 | 9.4 |
| | Eb (%) | 210 | 240 | 180 | 300 | 210 |
| Product evaluation | | | | | | |
| Torque (N·cm) 2000 rpm | New product Worn product Deterioration rate | 30.2 44.2 46.4 | 33.7 49.3 46.5 | 31.0 58.3 88.0 | 38.0 62.0 63.2 | 31.6 45.6 44.4 |
| Pump amount Q (cc/hr) 2000 rpm | New product Worn product | 39.6 64.7 | 35.2 62.2 | 37.6 58.1 | 38.9 47.6 | 45.4 32.4 |
| Conformability to eccentricity | | A | B | B | A | C |

## Claims

1. A crosslinked fluororubber for a rotational sliding sealing, wherein a fluororubber polymer composed of 95 to 50 wt% of a polyol-crosslinkable fluororubber polymer and 5 to 50 wt% of a liquid fluororubber polymer is obtained by crosslinking with polyol alone using a polyol crosslinking agent.

2. The crosslinked fluororubber for the rotational sliding sealing according to claim 1, wherein the polyol-crosslinkable fluororubber polymer is a binary fluororubber polymer or a ternary fluororubber polymer of a polyol-crosslinking type.

3. The crosslinked fluororubber for the rotational sliding sealing according to claim 1 or 2, wherein 1 to 10 parts by weight of the polyol crosslinking agent is blended to 100 parts by weight of the fluororubber polymer composed of 95 to 50 wt% of the polyol-crosslinkable fluororubber polymer and 5 to 50 wt% of the liquid fluororubber polymer.

4. The crosslinked fluororubber for the rotational sliding sealing according to claim 1 or 2, wherein 2 to 5 parts by weight of the polyol crosslinking agent is blended to 100 parts by weight of the fluororubber polymer composed of 95 to 50 wt% of the polyol-crosslinkable fluororubber polymer and 5 to 50 wt% of the liquid fluororubber polymer.

5. A method for producing a crosslinked fluororubber for a rotational sliding sealing, wherein a polyol crosslinking agent is blended to a fluororubber polymer composed of 95 to 50 wt% of a polyol-crosslinkable fluororubber polymer and 5 to 50 wt% of a liquid fluororubber polymer to prepare a fluororubber composition, which is then crosslinked.

6. The method for producing the crosslinked fluororubber for rotational sliding sealing according to claim 5, wherein the polyol-crosslinkable fluororubber polymer is a binary fluororubber polymer or a ternary fluororubber polymer of a polyol-crosslinking type.

7. The method for producing the crosslinked fluororubber for rotational sliding sealing according to claim 5 or 6, wherein 1 to 10 parts by weight of the polyol crosslinking agent is blended to 100 parts by weight of the fluororubber polymer composed of 95 to 50 wt% of the polyol-crosslinkable fluororubber polymer and 5 to 50 wt% of the liquid fluororubber polymer.

8. The method for producing the crosslinked fluororubber for rotational sliding sealing according to claim 5 or 6, wherein 2 to 5 parts by weight of the polyol crosslinking agent is blended to 100 parts by weight of the fluororubber polymer composed of 95 to 50 wt% of the polyol-crosslinkable fluororubber polymer and 5 to 50 wt% of the liquid fluororubber polymer.

## Amended claims

### Amended claims in accordance with Rule 137(2) EPC.

1. (Amended) A rotational sliding sealing composed of a crosslinked fluororubber obtained by crosslinking a fluororubber polymer composed of 95 to 50 wt% of a polyol-crosslinkable fluororubber polymer and 5 to 50 wt% of a liquid fluororubber polymer with polyol alone using a polyol crosslinking agent.

2. (Amended) The rotational sliding sealing according to claim 1, wherein said crosslinked fluororubber contains at least wollastonite.

3. (Amended) The rotational sliding sealing according to claim 1 or 2, wherein said crosslinked fluororubber contains wollastonite and diatomite.

4. (Amended) The rotational sliding sealing according to any of claims 1 to 3, wherein the polyol-crosslinkable fluororubber polymer is a binary fluororubber polymer or a ternary fluororubber polymer of a polyol-crosslinking type.

5. (Amended) The rotational sliding sealing according to any of claims 1 to 4, wherein 1 to 10 parts by weight of the polyol crosslinking agent is blended to 100 parts by weight of the fluororubber polymer composed of 95 to 50 wt% of the polyol-crosslinkable fluororubber polymer and 5 to 50 wt% of the liquid fluororubber polymer.

6. (Amended) The rotational sliding sealing according to any of claims 1 to 4, wherein 2 to 5 parts by weight of the polyol crosslinking agent is blended to 100 parts by weight of the fluororubber polymer composed of 95 to 50 wt% of the polyol-crosslinkable fluororubber polymer and 5 to 50 wt% of the liquid fluororubber polymer.

7. (Amended) A method for producing a rotational sliding sealing, wherein a polyol crosslinking agent is blended to a fluororubber polymer composed of 95 to 50 wt% of a polyol-crosslinkable fluororubber polymer and 5 to 50 wt% of a liquid fluororubber polymer to prepare a fluororubber composition, which is then crosslinked and molded.

8. (Amended) The method for producing the rotational sliding sealing according to claim 7, wherein said fluororubber composition contains at least wollastonite.

9. (Added) The method for producing the rotational sliding sealing according to claim 7 or 8, wherein said fluororubber composition contains wollastonite and diatomite.

10. (Added) The method for producing the rotational sliding sealing according to any of claims 7 to 9, wherein the polyol-crosslinkable fluororubber polymer is a binary fluororubber polymer or a ternary fluororubber polymer of a polyol-crosslinking type.

11. (Added) The method for producing the rotational sliding sealing according to any of claims 7 to 10, wherein 1 to 10 parts by weight of the polyol crosslinking agent is blended to 100 parts by weight of the fluororubber polymer composed of 95 to 50 wt% of the polyol-crosslinkable fluororubber polymer and 5 to 50 wt% of the liquid fluororubber polymer.

12. (Added) The method for producing the rotational sliding sealing according to any of claims 7 to 10, wherein 2 to 5 parts by weight of the polyol crosslinking agent is blended to 100 parts by weight of the fluororubber polymer composed of 95 to 50 wt% of the polyol-crosslinkable fluororubber polymer and 5 to 50 wt% of the liquid fluororubber polymer.
Claim 1 has been amended to "a rotational sliding sealing composed of a crosslinked fluororubber", and has limited the use to the rotational sliding sealing which is a dynamic sealing.
On the contrary, the fluororubbers included in Cited Literatures 1 and 2 are used for sealing materials such as gaskets, O-rings and packings, which are static sealings.
Claim 2 has incorporated therein a constitution wherein the fluororubber contains at least wollastonite from Example.
Claim 3 has incorporated therein a constitution wherein the fluororubber contains wollastonite and diatomite from Example.
Claims 4 to 7 have corresponded to original claims 2 to 5 postponed because claims 2 and 3 have been added.
Claims 7 has been amended to "a method for producing a rotational sliding sealing", and has made it clear that claim 7 is the process for producing the rotational sliding sealing which is the dynamic sealing.
Claim 8 has incorporated therein the constitution wherein the fluororubber contains at least wollastonite from Example.
Claim 9 has incorporated therein the constitution wherein the fluororubber contains wollastonite and diatomite from Example.
Claims 10 to 12 have corresponded to original claims 6 to 8 postponed because claims 8 and 9 have been added.
